# EUROPEAN PATENT APPLICATION

(11) **EP 4 546 185 A1**
(43) Date of publication of application: **30.04.2025**
(21) Application number: 23845096.9
(22) Date of filing: 06.06.2023
(51) Int. Cl.: G06F 21/55

(54) **INFORMATION LEAKAGE PREVENTION METHOD AND APPARATUS, AND STORAGE MEDIUM**

(30) Priority: 25.07.2022 CN 202210875550
(71) Applicant: ZTE Corporation, Shenzhen, Guangdong 518057 (CN)
(72) Inventor: ZHAO, Yalai, Shenzhen, Guangdong 518057 (CN)
(74) Representative: Chimini, Francesco
(86) International application number: PCT/CN2023/098609
(87) International publication number: WO 2024/021883

(57) **Abstract**

The present application provides an information leakage prevention method and apparatus, and a storage medium. The information leakage prevention method comprises: receiving video information sent by a cloud desktop terminal, wherein the video information is acquired by the cloud desktop terminal upon receipt of a first trigger instruction, and the first trigger instruction is sent by a cloud desktop server in response to a target operation executed on a cloud desktop (S100); performing leakage analysis on the video information (S200); and when it is determined according to the video information that a leakage behavior exists, performing screen locking on the cloud desktop, and saving the video information in a first target time period, wherein the first target time period is determined according to the moment when it is determined that the leakage behavior exists (S300).

## Description

### Cross-Reference to Related Application

The present disclosure is based upon and claims the benefit of priority from Chinese Patent Application No. 202210875550.2, filed on July 25, 2022, the disclosure of which is incorporated herein in its entirety by reference.

### Technical Field

Embodiments of the present disclosure relate to the field of cloud desktop application technologies, and in particular, to an information leakage prevention method and apparatus, and a storage medium.

### Background

Currently, cloud desktop systems mainly rely on digital watermarking technology to deter leakers or those who intend to leak information, which is essentially an after-the-fact accountability measure rather than a direct prevention of information leakage. Additionally, with the widespread use of smart phones, it has become very convenient to take photos or record screens through mobile devices. Moreover, the method of capturing information via smart phone photography does not retain original file metadata, making it generally more difficult to trace back to the source of the leakage.

### Summary

The embodiments of the present disclosure provide an information leakage prevention method and apparatus, and a storage medium.

According to a first aspect, the embodiments of the present disclosure provide an information leakage prevention method. The information leakage prevention method includes: receiving video information sent by a cloud desktop terminal, wherein the video information is collected by the cloud desktop terminal upon receiving a first trigger instruction, and the first trigger instruction is sent by a cloud desktop server in response to a target operation executed on a cloud desktop; performing a leakage analysis on the video information; and in a case of determining according to the video information that a leakage behavior exists, locking a screen of the cloud desktop, and saving the video information within a first target time period, wherein the first target time period is determined according to a moment of determining that the leakage behavior exists.

According to a second aspect, the embodiments of the present disclosure provide an information leakage prevention apparatus, including a memory, a processor, and a computer program stored in the memory and operable on the processor, wherein the processor, when executing the computer program, implements the foregoing information leakage prevention method.

According to a third aspect, the embodiments of the present disclosure provide a computer-readable storage medium, storing computer executable instructions, wherein the computer executable instructions are used for executing the foregoing information leakage prevention method.

### Brief Description of the Drawings

Fig. 1 is a flowchart of an information leakage prevention method according to an embodiment of the present disclosure;
Fig. 2 is a flowchart of performing a leakage analysis on video information according to an embodiment of the present disclosure;
Fig. 3 is a flowchart of operations performed after screen locking according to an embodiment of the present disclosure;
Fig. 4 is a flowchart of operations performed after screen locking according to another embodiment of the present disclosure;
Fig. 5 is a flowchart of operations performed after screen locking according to still another embodiment of the present disclosure;
Fig. 6 is a block diagram of an information leakage prevention apparatus according to an embodiment of the present disclosure; and
Fig. 7 is an exemplary flowchart of information leakage prevention according to an embodiment of the present disclosure.

### Detailed Description of the Embodiments

To make the objectives, technical solutions, and advantages of the present disclosure clearer and more comprehensible, the following further describes the present disclosure in detail with reference to the accompanying drawings and embodiments. It should be understood that the embodiments described herein are only intended to explain the present disclosure, but not to limit the present disclosure.

It should be noted that, although a logic sequence is shown in the flowchart, in some cases, the shown or described operations may be executed in a sequence different from that in the flowchart. The terms "first" and "second" in the description, the claims, and the accompanying drawings are used to distinguish similar objects, and are not necessarily used to describe a specific sequence or order.

It should also be noted that in various implementations of the present disclosure, when it is necessary to perform related processing according to data related to characteristics of a user, such as attribute information or a set of attribute information of the user, permission or consent from the user will be obtained beforehand. Moreover, the collection, use, and processing of such data will comply with the relevant laws, regulations, and standards of the corresponding countries and regions. In addition, when obtaining the attribute information of the user in the embodiments of the present disclosure, methods such as pop-up windows or redirection to confirmation pages may be used to obtain explicit permission or consent from the user. Only after explicitly obtaining explicit permission or consent from the user, will the necessary related data of the user be collected to enable the normal operation of the embodiments of the present disclosure.

The embodiments of the present disclosure provide an information leakage prevention method and apparatus, and a storage medium. Based on a target operation executed on a cloud desktop, a cloud desktop server sends a first trigger instruction, and receives video information collected by a cloud desktop terminal according to the first trigger instruction. Then, leakage analysis is performed based on the video information, so as to check whether there is any leakage behavior such as unauthorized photography by a mobile terminal. When the leakage analysis based on the video information confirms existence of the leakage behavior, a screen of the cloud desktop is locked (i.e., a screen locking operation is performed on the cloud desktop), thereby preventing the leakage of confidential information at the source. In addition, the video information confirming the leakage behavior is also saved, which is beneficial for post-event auditing. Moreover, video collection by the cloud desktop terminal is triggered by the target operation executed by the user on the cloud desktop, and the video collection is only performed in a specific time period, thus effectively protecting the privacy and security of the user.

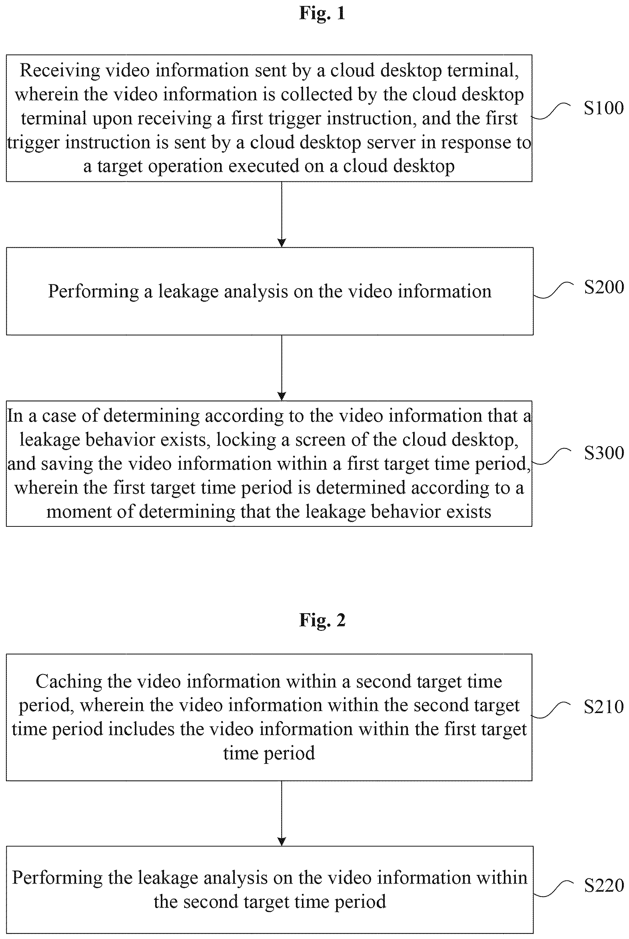

Fig. 1 is a flowchart of an information leakage prevention method according to an embodiment of the present disclosure.

As shown in Fig. 1, the information leakage prevention method includes operations S100, S200 and S300.

In operation S100, video information sent by a cloud desktop terminal is received, wherein the video information is collected by the cloud desktop terminal upon receiving a first trigger instruction, and the first trigger instruction is sent by a cloud desktop server in response to a target operation executed on a cloud desktop.

In operation S200, a leakage analysis is performed on the video information.

In operation S300, in a case of determining according to the video information that a leakage behavior exists, a screen of the cloud desktop is locked, and the video information within a first target time period is saved, wherein the first target time period is determined according to a moment of determining that the leakage behavior exists.

In the embodiment, when a target operation executed on a cloud desktop is received, a first trigger instruction may be generated and sent to a cloud desktop terminal, and then video information collected by the cloud desktop terminal is received. After the video information begins to be received, leakage analysis is performed on the video information, so as to intelligently analyze whether any leakage behavior such as unauthorized photography by a mobile terminal exists in the received video information. When the unauthorized photography exists in the video information, that is, when it is determined that the leakage behavior exists, a screen locking instruction is immediately sent to the cloud desktop terminal to lock the screen of the cloud desktop. In addition, the video information within a first target time period is stored, wherein the first target time period is a time period including a time interval before and after the moment of determining through the leakage analysis that the leakage behavior exists. By virtue of the solution, the screen locking operation may ensure that information is not leaked, and a post-event auditing may also be ensured by storing the video information recording the information leakage. Moreover, because video collection is triggered by the target operation executed by the user on the cloud desktop, the information leakage prevention method in the embodiment effectively protects privacy and security of the user under the premise of preventing information leakage, thereby providing the user with usage trust.

The information leakage prevention method of the embodiment may be applied to different scenarios such as enterprise office or personal user office. For enterprise office, an anti-unauthorized photography function may be automatically activated, thereby applying the aforementioned information leakage prevention method. For personal user office, since a personal user typically handles tasks on his/her private device, in consideration of the privacy of the personal user, the user is enabled to decide whether to activate the anti-unauthorized photography function and when to use the anti-unauthorized photography function.

Fig. 2 is a flowchart of performing a leakage analysis on video information according to an embodiment of the present disclosure. As shown in Fig. 2, which further illustrates the operation S200, the operation S200 includes, but is not limited to, operations S210 and S220.

In operation S210, the video information within a second target time period is cached, wherein the video information within the second target time period includes the video information within the first target time period.

In operation S220, the leakage analysis is performed on the video information within the second target time period.

In this embodiment, the leakage analysis has been expanded. When starting the intelligent analysis on the received video information, video information for N seconds prior to the current analysis moment is also saved in the cache, so as to facilitate the saving of relevant video information when any unauthorized photography behavior is detected, which can be used for post-event auditing and evidence. It should be noted that the time parameter N is configurable, for example, the time parameter may be set to 10 seconds.

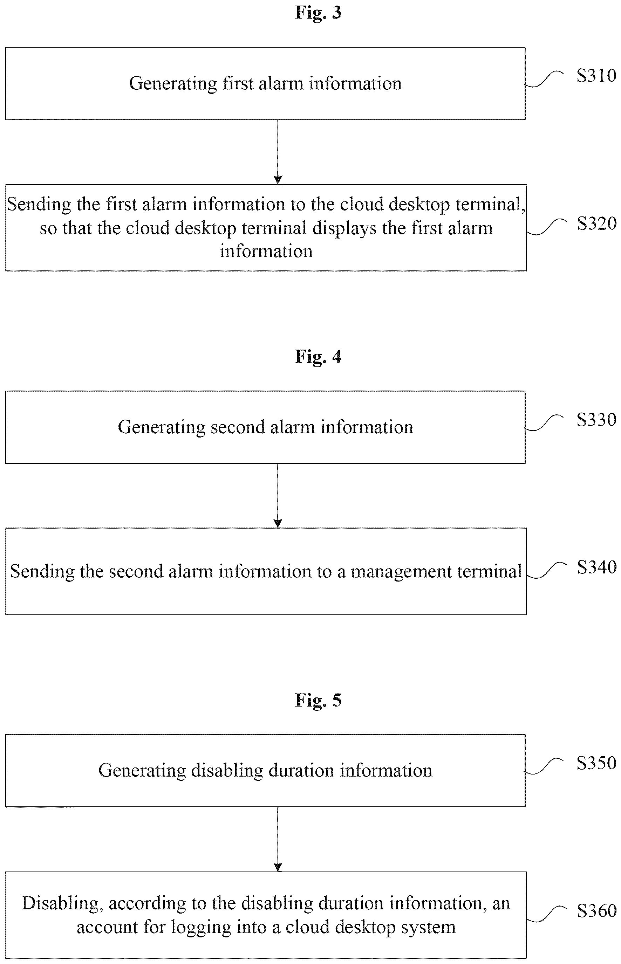

Fig. 3 is a flowchart of operations performed after screen locking according to an embodiment of the present disclosure. As shown in Fig. 3, which further illustrates the operation S300, the operation S300 includes, but is not limited to, operation S310 and operation S320.

In operation S310, first alarm information is generated.

In operation S320, the first alarm information is sent to the cloud desktop terminal, so that the cloud desktop terminal displays the first alarm information.

After the screen of the cloud desktop is locked, first alarm information is generated immediately and sent to the cloud desktop terminal, and the first alarm information is displayed on the locked screen to prompt suspicious individual detected attempting to take unauthorized photos.

Fig. 4 is a flowchart of operations performed after screen locking according to another embodiment of the present disclosure. As shown in Fig. 4, which further illustrates the operation S300, the operation S300 includes, but is not limited to, operation S330 and operation S340.

In operation S330, second alarm information is generated.

In operation S340, the second alarm information is sent to a management terminal.

After the screen of the cloud desktop is locked, second alarm information is also generated immediately and sent to the user and the administrator, so as to prompt the user and the administrator about suspicious individual detected attempting to take unauthorized photos. The second alarm information may be sent in a manner of an email, a short message, or a network management interface popup box.

Fig. 5 is a flowchart of operations performed after screen locking according to still another embodiment of the present disclosure. As shown in Fig. 5, which further illustrates the operation S300, the operation S300 includes, but is not limited to, operation S350 and operation S360.

In operation S350, disabling duration information is generated.

In operation S360, an account for logging into a cloud desktop system is disabled according to the disabling duration information.

After an alarm prompt is given to the administrator and the user, disabling duration information is generated immediately, so that the cloud desktop terminal disables, according to the disabling duration information, the account for logging into the cloud desktop system currently. The disabling duration may be configurable, for example, may be 30 minutes.

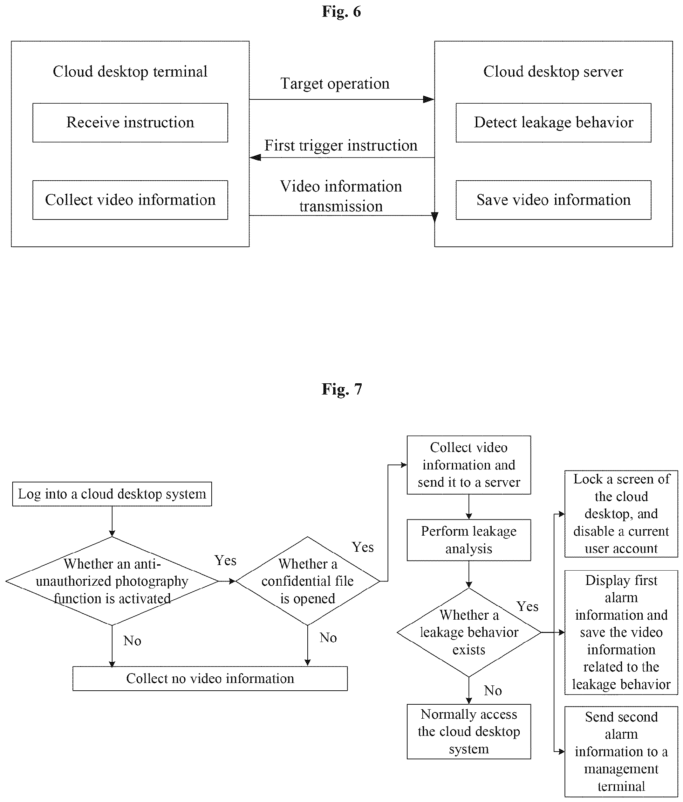

Fig. 6 is a block diagram of an information leakage prevention apparatus according to an embodiment of the present disclosure, which mainly illustrates a system for supporting the information leakage prevention method. As shown in Fig. 6, the left side in the figure is a cloud desktop terminal, which mainly receives an instruction from a cloud desktop server and completes a corresponding action according to the instruction, i.e., collection of video information. The right side in the figure is a cloud desktop server, which mainly functions to send a first trigger instruction, a video acquisition instruction, etc., to the cloud desktop terminal, perform a leakage detection on the video information sent by the cloud desktop terminal, and save the video information after detecting a leakage behavior.

Fig. 7 is an exemplary flowchart of information leakage prevention according to an embodiment of the present disclosure. As shown in Fig. 7, the execution flow of the entire information leakage prevention method is as follows.

When a user logs into a cloud desktop system, whether an anti-unauthorized photography function is activated is determined. If not activated, no video information is collected; and if activated, the flow proceeds to the next operation to determine whether a confidential file is opened. If no confidential file is opened, no video information is collected; and if a confidential file is opened, video information is collected and sent to a cloud desktop server for leakage analysis. The leakage analysis checks for any leakage behavior in the video information. If no leakage behavior is detected, the cloud desktop system is accessed normally; and if leakage behavior is detected, a screen of the cloud desktop is locked, a current user account is disabled, first alert information is displayed on the locked screen and video information related to the leakage is stored, and finally, second alert information is simultaneously sent to a management terminal.

In some embodiments, to avoid false positives or situations where taking photos of confidential files is a necessary operation by the user under special circumstances, permissions can be set for administrators or multiple verification methods may be provided for the user. For example, if a personal user is falsely detected as engaging in unauthorized photography during his/her work, leading to account disablement, the disablement may be lifted through facial recognition, customized unlock passwords, or other related verification methods to ensure normal office work is protected.

In some embodiments, the target operation includes:
logging into a cloud desktop system; or
opening a confidential file; or
triggering an anti-leakage control.

Due to different office scenarios, the target operation also includes various possibilities. When in an enterprise office scenario, the target operation may be set as automatically activating the anti-unauthorized photography function upon logging into the cloud desktop system. The target operation may also be set as triggering the anti-unauthorized photography function when opening a confidential file, thereby triggering video collection. When in a personal user office scenario, in addition to the aforementioned target operation, the user may trigger the anti-leakage control himself/herself and enable the anti-unauthorized photography function after obtaining user permission, fully respecting the choice and privacy protection of the user.

In some embodiments, the information leakage prevention method also includes:
in a case of determining according to the video information that the leakage behavior does not exist, a current running state of the cloud desktop is maintained.

When intelligent analysis of the video information shows no related unauthorized photography behavior, no measures are taken, and the current operation state of the cloud desktop is maintained. Video information continues to be collected and analyzed continuously until the confidential file is closed to ensure that confidential information is not leaked throughout the entire usage process.

In some embodiments, before receiving the video information sent by the cloud desktop terminal, the information leakage prevention method may further include:
generating the first trigger instruction in response to executing the target operation on the cloud desktop; and
sending the first trigger instruction to the cloud desktop terminal, so that the cloud desktop terminal collects the video information according to the first trigger instruction.

When any of the aforementioned target operations are triggered on the cloud desktop, the cloud desktop server generates the first trigger instruction and sends the first trigger instruction to the cloud desktop terminal. The first trigger instruction includes a video information collection instruction, and the cloud desktop terminal begins to collect video information upon receiving the first trigger instruction.

To more clearly illustrate the processing flow of the information leakage prevention method provided in the embodiments of the present disclosure, two office scenarios are described below as examples.

Enterprise office scenario: the information leakage prevention method includes the following operations.

The enterprise uniformly configures clients with video collection capabilities for its employees to log into the cloud desktop for enterprise office work. The backend administrator enables the anti-unauthorized photography function. After an employee logs into the cloud desktop system and opens a confidential file, video information collection is triggered. The collected video information is the real-time video information of the employee in front of the client, and the video information is sent to the backend cloud desktop server for intelligent analysis of any unauthorized photography behavior. At the same time, the video from N seconds before the intelligent analysis moment is stored in the cache of the cloud desktop server. When intelligent analysis detects unauthorized photography behavior performed though a mobile phone, screen locking information is generated and sent to the cloud desktop terminal, automatically locking the employee's cloud desktop. First alert information, second alert information, and disabling duration information are generated. The first alert information is displayed on the locked screen to indicate a violation of regulations by the employee. The second alert information is sent to the administrator to indicate a potential risk of confidential information leakage. After displaying the violation on the locked screen, the employee's account is disabled based on the disabling duration information. After ensuring that confidential information has not been leaked, the video information before and after the detected unauthorized photography behavior is stored for post-event auditing and evidence. A video collection device includes but is not limited to a smart camera, a Universal Serial Bus (USB) camera, or a built-in camera of the client, etc. The disabling duration information is usually set to 30 minutes, but this embodiment does not limit it to this setting.

Personal user office scenario: the information leakage prevention method includes the following operations.

When a user works in a public place using a client with video collection capabilities, the anti-unauthorized photography function can be enabled based on the user's needs. The user logs into the cloud desktop with his/her account and password for office work, and may set up the system to activate the anti-unauthorized photography function upon opening a confidential file or activates an anti-leakage control to turn on the anti-unauthorized photography function. When the user opens a confidential file and has enabled the anti-unauthorized photography function, the client triggers video collection, collecting real-time video information around the user in front of the client and sending the collected video to the cloud desktop server for intelligent analysis to detect any unauthorized photography behavior. Concurrently, the video from N seconds before the intelligent analysis moment is stored in the cache of the cloud desktop server. If intelligent analysis detects an unauthorized photography behavior performed by a mobile phone, screen locking information is generated and sent to the cloud desktop terminal, automatically locking the cloud desktop of the user. First alert information, second alert information, and disabling duration information are generated. The first alert information is displayed on the locked screen to indicate the presence of suspicious individuals attempting to take unauthorized photos. The second alert information is sent to the user to warn him/her of a potential risk of confidential information leakage. After displaying the violation on the locked screen, the account of the current user is disabled based on disabling duration information. After ensuring that confidential information has not been leaked, the video information before and after the detected unauthorized photography behavior is stored for post-event auditing and evidence. If the intelligent analysis is a false positive or the photography operation is performed by the user himself/herself, the user may lift the disablement through facial recognition, verification code validation, or a disablement password, confirming that there are no suspicious individuals attempting to take unauthorized photos, allowing the user to continue his/her work. This effectively protects user efficiency while safeguarding user privacy and the security of confidential file information. When the user activates the anti-leakage control to turn on the anti-unauthorized photography function, the client, after the anti-leakage control has been opened, triggers video collection upon opening of a confidential file, with subsequent operations already described in detail and not repeated here.

An embodiment of the present disclosure provides a computer-readable storage medium storing computer-executable instructions for executing the aforementioned information leakage prevention method. For example, a processor in the embodiment of the information leakage prevention apparatus executes these instructions to perform the information leakage prevention method described above, such as executing the methods illustrated in Figs. 1 to 5.

Furthermore, an embodiment of the present disclosure provides an information leakage prevention apparatus, which includes a memory, a processor, and a computer program stored on the memory and executable on the processor. The processor, when executes the computer program, implements the information leakage prevention method described above.

Non-volatile software programs and instructions required to implement the information leakage prevention method in the aforementioned embodiments are stored in the memory and executed by the processor, performing the information leakage prevention method described in the aforementioned embodiments, such as executing the methods illustrated in Figs. 1 to 5.

The embodiments of the information leakage prevention method include: receiving video information sent by a cloud desktop terminal, wherein the video information is collected by the cloud desktop terminal upon receiving a first trigger instruction, and the first trigger instruction is sent by a cloud desktop server in response to a target operation executed on a cloud desktop; performing a leakage analysis on the video information; and in a case of determining according to the video information that a leakage behavior exists, locking a screen of the cloud desktop, and saving the video information within a first target time period, wherein the first target time period is determined according to a moment of determining that the leakage behavior exists. Based on a target operation executed on a cloud desktop, a cloud desktop server sends a first trigger instruction, and receives video information collected by a cloud desktop terminal according to the first trigger instruction. Then, leakage analysis is performed based on the video information, so as to check whether there is any leakage behavior such as unauthorized photography by a mobile terminal. When the leakage analysis based on the video information confirms existence of the leakage behavior, a screen of the cloud desktop is locked (i.e., a screen locking operation is performed on the cloud desktop), thereby preventing the leakage of confidential information at the source. **In** addition, the video information confirming the leakage behavior is also saved, which is beneficial for post-event auditing. Moreover, video collection by the cloud desktop terminal is triggered by the target operation executed by the user on the cloud desktop, and the video collection is only performed in a specific time period, thus effectively protecting the privacy and security of the user.

Those having ordinary skill in the art may understand that all or some of the operations and systems in the methods disclosed in the foregoing may be implemented as software, firmware, hardware, and a proper combination thereof. Some or all of the physical components may be implemented as software executed by a processor, such as a central processor, digital signal processor, or microprocessor, or as hardware, or as an integrated circuit, such as an application specific integrated circuit. Such software may be distributed on computer-readable medium, which may include computer storage medium (or non-transitory medium), and communication medium (or transitory medium). As is well known to those having ordinary skill in the art, the term computer storage medium includes both volatile and nonvolatile, removable and non-removable medium implemented in any method or technology for storage of information such as computer readable instructions, data structures, program modules, or other data. Computer storage medium includes, but is not limited to, Random Access Memory (RAM), Read-Only Memory (ROM), Electrically Erasable Programmable Read-Only Memory (EEPROM), flash memory or other memory technology, CD-ROM, Digital Versatile Discs (DVD) or other optical disk storage, magnetic cassettes, magnetic tape, magnetic disk storage or other magnetic storage devices, or any other medium which can be used to store the desired information and which can be accessed by a computer. In addition, communication medium typically embodies computer readable instructions, data structures, program modules, or other data in a modulated data signal such as a carrier wave or other transport mechanism and may include any information delivery medium as is known to those having ordinary skill in the art.

## Claims

1. An information leakage prevention method, comprising:
receiving video information sent by a cloud desktop terminal, wherein the video information is collected by the cloud desktop terminal upon receiving a first trigger instruction, and the first trigger instruction is sent by a cloud desktop server in response to a target operation executed on a cloud desktop;
performing a leakage analysis on the video information; and
in a case of determining according to the video information that a leakage behavior exists, locking a screen of the cloud desktop, and saving the video information within a first target time period, wherein the first target time period is determined according to a moment of determining that the leakage behavior exists.

2. The information leakage prevention method according to claim 1, wherein performing the leakage analysis on the video information comprises:
caching the video information within a second target time period, wherein the video information within the second target time period comprises the video information within the first target time period; and
performing the leakage analysis on the video information within the second target time period.

3. The information leakage prevention method according to claim 1, wherein after locking the screen of the cloud desktop, the information leakage prevention method further comprises:
generating first alarm information; and
sending the first alarm information to the cloud desktop terminal, so that the cloud desktop terminal displays the first alarm information.

4. The information leakage prevention method according to claim 1, wherein after locking the screen of the cloud desktop, the information leakage prevention method further comprises:
generating second alarm information; and
sending the second alarm information to a management terminal.

5. The information leakage prevention method according to claim 1, wherein after locking the screen of the cloud desktop, the information leakage prevention method further comprises:
generating disabling duration information; and
disabling, according to the disabling duration information, an account for logging into a cloud desktop system.

6. The information leakage prevention method according to claim 1, wherein the target operation comprises one of:
logging into a cloud desktop system; or
opening a confidential file; or
triggering an anti-leakage control.

7. The information leakage prevention method according to claim 1, further comprising:
in a case of determining according to the video information that the leakage behavior does not exist, maintaining a current running state of the cloud desktop.

8. The information leakage prevention method according to claim 1, wherein before receiving the video information sent by the cloud desktop terminal, the information leakage prevention method further comprises:
generating the first trigger instruction in response to executing the target operation on the cloud desktop; and
sending the first trigger instruction to the cloud desktop terminal, so that the cloud desktop terminal collects the video information according to the first trigger instruction.

9. An information leakage prevention apparatus, comprising a memory, a processor, and a computer program stored in the memory and operable on the processor, wherein the processor, when executing the computer program, implements the information leakage prevention method according to any one of claims 1 to 8.

10. A computer readable storage medium, storing computer executable instructions, wherein the computer executable instructions are used for executing the information leakage prevention method according to any one of claims 1 to 8.
